# EUROPEAN PATENT SPECIFICATION

(11) **EP 3 849 099 B1**
(45) Date of publication and mention of the grant of the patent: **07.01.2026**
(21) Application number: 20217200.3
(22) Date of filing: 24.12.2020
(51) Int. Cl.: H04B 7/06

(54) **CHANNEL SOUNDING FOR MULTI-AP COORDINATED BEAMFORMING (CBF) AND MULTI-AP JOINT TRANSMISSION (JT) IN AN EHT NETWORK**
KANALSONDIERUNG FÜR MULTI-AP KOORDINIERTE STRAHLFORMUNG (CBF) UND GEMEINSAME MEHRFACH-AP-ÜBERTRAGUNG IN EINEM EHT-NETZWERK
SONDAGE DE CANAL POUR UNE FORMATION DE FAISCEAU COORDONNÉE MULTI-AP (CBF) ET UNE TRANSMISSION CONJOINTE (JT) MULTI-AP DANS UN RÉSEAU EHT

(30) Priority: 07.01.2020 US 202062957952 P; 08.01.2020 US 202062958463 P
(43) Date of publication of application: 14.07.2021
(73) Proprietor: Jiang, Feng, Sunnyvale, CA 94086 (US); Li, Qinghua, San Ramon, California 94582 (US); Chen, Xiaogang, Hillsboro, Oregon 97124 (US); Huang, Po-kai, San Jose, California 95131 (US); Doostnejad, Roya, Los Altos, CA 94024 (US); Klein, Arik, 5442024 Givaat Shmuel M (IL); Cariou, Laurent, Portland, OR 97219 (US); Das, Dibakar, Hillsboro, OR 97123 (US)
(72) Inventor: Jiang, Feng, Sunnyvale, CA 94086 (US); Li, Qinghua, San Ramon, California 94582 (US); Chen, Xiaogang, Hillsboro, Oregon 97124 (US); Huang, Po-kai, San Jose, California 95131 (US); Doostnejad, Roya, Los Altos, CA 94024 (US); Klein, Arik, 5442024 Givaat Shmuel M (IL); Cariou, Laurent, Portland, OR 97219 (US); Das, Dibakar, Hillsboro, OR 97123 (US)
(74) Representative: Viering, Jentschura & Partner mbB Patent- und Rechtsanwälte

(56) References cited:
- EP-A1- 3 525 511

## Description

### PRIORITY CLAIMS

This application claims priority to United States Provisional Patent Application Serial No. 62/957,952, filed January 07, 2020 [reference number AC7417-Z] and United States Provisional Patent Application Serial No. 62/958,463, filed January 08, 2020 [reference number AC7433-Z].

### TECHNICAL FIELD

Embodiments pertain to wireless communications. Some embodiments relate to wireless local area networks (WLANs). Some embodiments relate to WLAN communications in accordance with the IEEE 802.11be draft standard (i.e., Extremely High Throughput (EHT)). Some embodiments relate to multi-access point (multi-AP) operations in EHT networks.

### BACKGROUND

One issue with multi-AP operations in EHT networks is efficient channel sounding for coordinated beamforming (CBF) and/or joint transmission (JT). Another issue is EHT signaling and resource allocation within an EHT target wake time (TWT) service period (SP).

EP 3525511A1 describes a method for reporting channel information by a station (STA) in a very high throughput (VHT) wireless LAN (WLAN) system comprising the steps of: receiving a null data packet announcement (NDP-A) frame from a first access point (AP); when it is determined that the NDP-A frame is for joint transmission of a plurality of APs, measuring a channel for a first AP having transmitted the NDP-A frame and a channel for at least one second AP channel which has not transmitted the NDP-A frame; and transmitting channel information for the plurality of APs, which has been acquired according to a result of the channel measurement, to the first AP, wherein when the NDP-A frame is for the joint transmission, the STA can acquire channel information relating to the plurality of APs through a plurality of NDP frames received from the plurality of APs after receiving the NDP-A frame one time.

### SUMMARY

The invention is an apparatus and computer-readable storage medium as defined in the appended claims.

### BRIEF DESCRIPTION OF THE DRAWINGS

FIG. 1 illustrates a sounding sequence for coordinated beamforming (CBF) in accordance with some embodiments.
FIG. 2 illustrates a sounding sequence for channel sounding for joint transmission in accordance with some embodiments.
FIG. 3 illustrates a sounding sequence for channel sounding for joint transmission in accordance with some embodiments.
FIG. 4 illustrates a sounding sequence for channel sounding for coordinated beamforming (CBF) and joint transmission (JT) in accordance with some embodiments.
FIG. 5A illustrates a null data packet announcement (NDPA) frame format in accordance with some embodiments.
FIG. 5B illustrates a beam-forming refinement protocol (BFRP) trigger frame (TF) format in accordance with some embodiments.
FIG. 5C illustrates a sounding sequence for channel sounding for coordinated beamforming (CBF) and joint transmission (JT) in accordance with some embodiments.
FIG. 6 illustrates a sounding sequence for channel sounding for coordinated beamforming (CBF) and joint transmission (JT) in accordance with some embodiments.
FIG. 7A illustrates station (STA) presence signaling and resource allocation within a EHT target wake-up time (TWT) service period (SP) in accordance with some embodiments.
FIG. 7B illustrates suspending and resuming TWT SP in another link by transmitting a MPDU containing a TWT Information frame and the link information in the A-Ctrl field, in accordance with some embodiments.
FIG. 8 illustrates a functional block diagram of a wireless communication device in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

In the development of EHT project, the multi-AP coordinated beamforming (CBF) and multi-AP joint transmission (JT) have been proposed. Example embodiments of the present disclosure relate to systems, methods, and devices for multi-AP channel sounding.

In one embodiment, a multi-AP channel sounding system may define an indication field in NDPA frame or trigger frame to indicate the purpose of channel sounding sequence, for example, joint transmission (JT) or coordinated beamforming (CBF). The proposed method reuses JT channel sounding to support CBF, which reduces the implementation complexity.

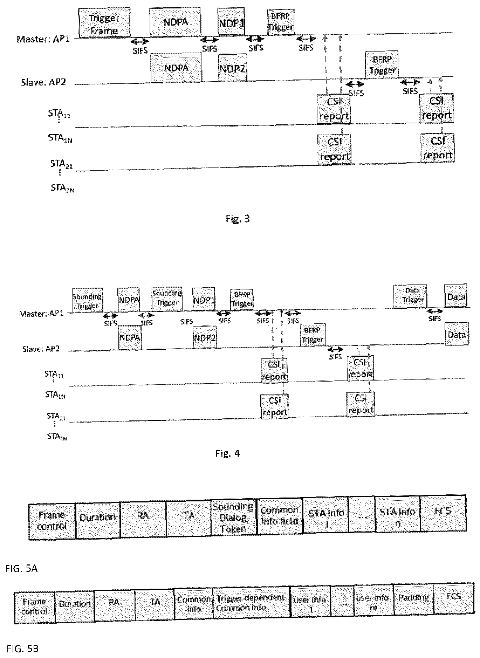

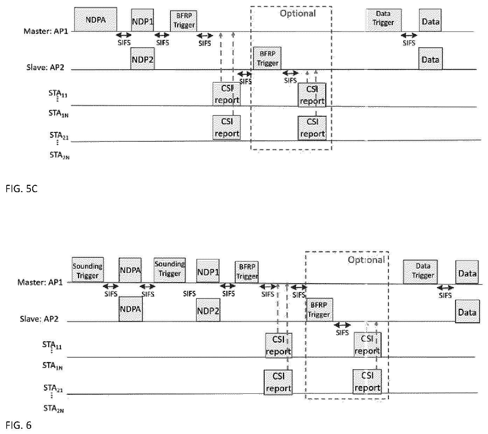

Some embodiments are directed to an access point station (AP) configured for multi-AP operation in an EHT network. In these embodiments, for multi-AP coordinated beamforming (CBF) and/or multi-AP joint transmission (JT), the AP may be configured to operate as a master AP (AP1) and implement a multi-AP channel sounding protocol, such as the multi-AP channel sounding protocol illustrated in FIG. 5. In these embodiments, the AP1 may be configured to encode a NDPA frame for transmission to poll one or more intra-BSS stations (STA₁₁..._{1N}) associated with the AP1 and one or more OBSS STAs (inter-BSS STAs) (STA₂₁..._{2N}) associated with a slave (i.e., second) AP (AP2). In these embodiments, the AP1 may also be configured to encode a first NDP (NDP1) frame for transmission an SIFS after the NDPA frame. The NDP1 may be transmitted concurrently with a second NDP (NDP2) transmitted by the AP2. In these embodiments, the AP1 may also be configured to encode a beam-forming refinement phase (BFRP) trigger frame for transmission an SIFS after the NDP1 frame. The BFRP trigger frame may identify both the one or more BSS stations and the one or more OBSS STAs. In these embodiments, the AP1 may also be configured to decode CSI report frames in TB PPDUs received from the BSS stations in the BFRP trigger frame and CSI report frames received from the OBSS STAs identified in the BFRP trigger frame.

In these embodiments, the AP1 may also be configured to encode a data trigger frame for transmission to the AP2, the BSS stations and the OBSS STAs, and encode a data frame for transmission to the one or more BSS STAs based on the CSI report frames from the one or more BSS STAs. In these embodiments, the data frame may be transmitted an SIFS after the data trigger frame. In these embodiments, the data trigger frame may trigger the AP2 to transmit a concurrent data frame to the OBSS STAs (STA₂₁..._{2N}) (i.e., the STAs associated with the AP2) an SIFS after the data trigger frame.

In some embodiments, to poll both the intra-BSS stations and the OBSS STAs, the NDPA frame may be encoded to include a common information field that identifies a BSS of the AP1 and identifies an OBSS of the AP2, and a STA information field that identifies the one or more BSS stations and the one or more OBSS STAs by their AID.

In some embodiments, the common information field further identifies a number of the BSS STAs and identifies a number of the OBSS STAs.

In some embodiments, the BFRP trigger frame, transmitted by the AP1, may be encoded to include a common information field that identifies the BSS of the AP1, identifies an OBSS of the AP2, identifies a number of the BSS STAs and identifies a number of the OBSS STAs, and a STA (i.e., user) information field that identifies the BSS stations and the OBSS STA by their AID. In these embodiments, STAs identified in the user information field are to transmit a CSI report in a TB PPDU based on channel information determined using the NDP1 and NDP2 frames.

In some embodiments, the BFRP trigger frame may be further encoded to include an indicator to indicate whether the multi-AP channel sounding protocol is for multi-AP CB or for multi-AP JT. In these embodiments, the data frame may be transmitted along with a data frame by the AP2 in accordance with either the multi-AP CBF or the multi-AP JT based on the indicator.

In some embodiments, the NDP1 frame may be for use by the one or more BSS STAs identified in the NDPA frame for determining channel information for the CSI reports. In these embodiments, the NDP2 frame may be for use by the one or more OBSS STAs identified in the NDPA frame for determining channel information for the CSI report. In these embodiments, when a STA is identified in the NDPA frame, the STA expects an NDP frame from its AP for performing channel measurements.

In some embodiments, the NDPA frame encoded to indicate to the AP2 to transmit the NDP2 frame an SIFS after the NDPA frame.

In some embodiments, after the AP2 is configured to transmit an optional BFRP trigger frame prior to receipt of the data trigger frame from the AP1, the optional BFRP trigger frame to solicit CSI reports from both the BSS STAs and the OBSS STAs.

In some embodiments, the AP1 may comprise a baseband processor. In some embodiments, the NDP1 frame may be encoded for transmission using two or more antennas. In some embodiments, the memory may be configured to store the NDPA frame.

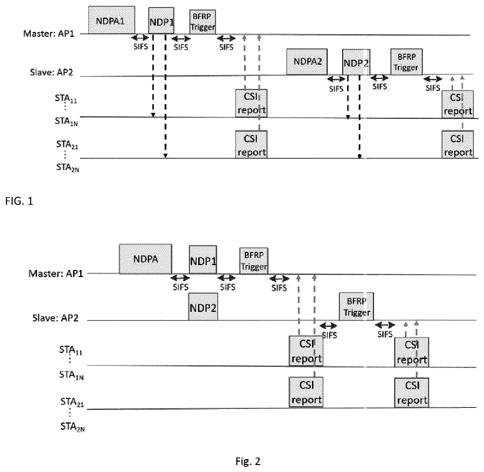

The sounding sequence in FIG. 1 is proposed for CBF, and in this sequence the 11ax sounding protocol is used for simplicity. The two sounding sequences in FIG. 2 and 3 are proposed for channel sounding of JT in the EHT group. After this channel sounding sequence, both of master AP and Slave AP will obtain of the CSI report from STA and this CSI report is calculated based on the NDP1 and NDP2.

There is no related proposal regarding detailed design of NDPA and BFRP trigger frames and the pathloss CSI feedback. For the time domain synchronization, a detailed synchronization is as below. In the second sounding trigger, the slave APs make a copy of the channel estimation based on the L-LTF or EHT-LTF and use the boundary of FFT window of the channel estimation as a reference point to count the length of the sounding trigger frame plus SIFS, then transmit NDP. This channel estimations will be used as reference for the data transmission to make sure that the NDP and the Date have the same relative timing across master AP and slave APs. To achieve this goal, for when the slave AP receives Data trigger, the slave AP make the second channel estimation based on the Data trigger and then compare the phase of the reference channel and the channel of Data trigger. The phase difference between two channel estimations is translated to a time domain offset parameter and use the FFT boundary of the second channel estimation is compensated by this time domain offset and the compensated FFT boundary is used as the reference point to count the frame length of Data trigger and SIFS, and then send Data frame.

The proposal in FIG. 4 is not efficient, since the second sounding trigger can be omitted, and meanwhile the time synchronization needs to be slightly revised. In coordinated beamforming (CBF) and joint transmission (JT), the AP needs to use NDPA to poll both of in-BSS and OBSS STAs, however, in the legacy design the NDPA only polls the in-BSS STA, and to enable the NDPA to poll OBSS STA, new designs are needed. An example of NDPA frame format design is shown in FIG. 5A:

The common info field can indicate the sounding sequence type, JT or CBF, and also indicates how many AP joins this sounding sequence and each AP's ID info, for example, BSSID or BSS color. The STA info fields are listed in the order of the BSS info in the common info field. For example, assume common info field include BSS1 (first in common info field) and BSS2 (second on in common info field) and BSS1 have two STA info and BSS2 have three STA infos, then the first two STA info fields belong to BSS1 and the three to five STA info fields belong to BSS2. The common info field may also include the number of spatial streams of the NDP from each BSS.

The common info field also indicates the number of STA info field associated with each AP, and may also indicate the offset of the first STA info field associated with each AP, such that if the STA detect its associated AP's BSS info in the common info field, the STA can directly jump to the location indicated by the offset value to parse the following N STA info fields associated with this BSS and the number N is indicated in common info field. If the STA detects its own AID in these N STA info fields, then it means that this STA is polled by this NDPA frame.

The common info field can be a new field and the number of bits may be predetermined, also the common info field can reuse the format of the STA info field but with a special AID value for differentiation with the regular STA info field. For the STA info field, a new format can be designed with 5 bytes or 6 bytes, or the current STA info field design can be reused. Current 11ax design STA info has 4 bytes, and two consecutive STA info fields can be combined into one big STA info field for multi-AP channel sounding, and these two STA info field carry the same AID.

For the BFRP trigger frame, the following frame format can be used shown in FIG. 5B. In the trigger type subfield of common info field, a new type of trigger frame can be defined for the multi-AP channel sounding sequence CSI feedback and in the trigger dependent common info field, a sub trigger type can be defined to further differentiate the channel sounding sequence, for example, JT or CBF, or in the common info field the master AP can indicates the type of the following sounding sequence, JT or CBF. In the trigger dependent common info field, the BSS info can be listed, and the BSS info is similar to BSS info in the NDPA frame, for example, list the BSSID or BSS color of each BSS that joins the multi-AP channel sounding, and for each BSS, list the number of user info field associated with this BSS. After the STA decode the trigger dependent common info field, it will know which set of user info field associated with its own AP and then the STA can jump to these user info fields to check whether its AID is included in these user info field, if yes, then the STA shall response with CSI report in TB PPDU according to the format indicated in the user info field. In addition to the legacy CSI format, compressed CSI report, CQI, and SNR of each spatial stream, the AP can also require STA to report the pathloss info, for example, the NDPA can indicates the Tx power of NDP, and based on NDP frame, the STA can calculate the path loss between AP and STA, and then report the pathloss in the CSI report frame.

This pathloss info will be useful for the coordinated spatial reuse, for example, the multi-AP can exchange pathloss info and the SINR info of each MCS level, then the Tx power of the multi-AP can be optimized to max the throughput.

Another design consideration is the time synchronization for JT. For the sequence in FIG. 5C, the slave AP can make a copy of the channel estimation of NDPA frame based on L-LTF or EHT-LTF, and for the Data Trigger, the slave AP make a second copy of channel estimation base on the L-LTF or EHT-LTF of Data Trigger, and the phase/time offset is computed based on these two channel estimations. The slave AP use the FFT window boundary of NDPA frame to count the length of NDPA (with adjustment of preamble length before L-LTF or EHT-LTF) plus SIFS, then send the NDP frame, and for the data transmission, the slave AP use the FFT window boundary of channel estimation of Data trigger as reference point and compensate with the time offset and the preamble length before L-LTF or EHT-LTF, then count the length of Data Trigger plus SIFS to transmit data.

In FIG. 6, the slave AP make the first channel estimation based on sounding trigger (L-LTF or EHT-LTF), then use the FFT window boundary of channel estimation as a reference point to count sounding trigger frame length (with adjustment of length of preamble before L-LTF or EHT-LTF) SIFS + NDPA length + SIFS, then sends the NDP frame. For the data transmission, the slave AP make the second channel estimation based on the Data trigger, and then compare phase difference between two channel estimations to calculate the time offset, the boundary of the FFT window for second channel estimation is used as reference point for count of length of Data trigger frame (with adjustment of length of preamble before L-LTF or EHT-LTF) plus SIFS, then sends data frame.

For the initiating of the multi-AP sounding sequence, two possible options may be considered:
- Random initiating: the APs initiate the sequential channel sounding when there is downlink data for CBF/JT transmission.

Scheduled initiating: the APs predefine some service period for CBF/JT transmission and the sequential channel sounding happens in each service period.

For CBF: When some AP has downlink data for transmission and the AP wants to utilize CBF, the AP can initiate the sequential channel sounding:
1. Before initiating channel sounding, the AP may exchange STA info or other info related with CBF with other APs that are expected to join CBF.
2. Initiating AP also reserves medium for sequential channel sounding, for example, using MU-RTS/CTS.
3. The NDPA frame from initiating AP may include BSSID/Color info and order info of the other APs that are expected to join the sequential sounding.
4. After the initiating AP finish channel sounding (NDPA+NDP+BFRP TF+CSI Report), the other APs may send NDPA frame to initiate its own sounding sequence.
5. CBF Data transmission will follow the sequential channel sounding.

For JT: The procedure is similar to CBF, except that for the Steps 3 and 4.
01. Before initiating channel sounding, the AP may exchange STA info or other info related with CBF with other APs that are expected to join JT.
2. Initiating AP also reserves medium for sequential channel sounding, for example, using MU-RTS/CTS.
3. The NDPA frame or trigger frame from initiating AP may include BSSID/Color info and order info of the other APs that are expected to join JT sounding.
4. After receiving NDPA or trigger frame, slave APs will response accordingly as shown in FIG. 2 and 3.
5. JT Data transmission will follow the sequential channel sounding.

Multi-AP can predefine some recurring service period for CBF/JT sounding and transmission. This service period info is broadcasted to all the APs' BSS. In each service period, the TxOP winner AP can initiate the sequential or joint channel sounding.

Multi-link operation is a key feature of extreme high throughput (EHT) wherein a station device (STA) multi-link logical entity (MLLE) can communicate to an access point (AP) MLLE on different links. Each link may be identified by a different (Operating Class, Channel Number, medium access control (MAC) address pair) tuple. Depending on the simultaneous Tx/Rx constraints introduced due to leakage, number of radios etc., a STA MLLE@ can either operate on multiple links simultaneously or at different times.

Target wake time (TWT) is a key scheduling feature in 802.11ax that allows an AP to allocate resources to its associated STAs. The basic feature of TWT is to negotiate time windows between the AP and STA in which they agree to communicate to each other. The STA can be expected to mostly remain in Doze state outside the negotiated time windows. 11ax defines rules and signaling for operations within the SP with regards to Poll and termination of the SP.

This disclosure addresses the following problems related to TWT extension for Multi-link:
1) STA presence signaling for non-collocated links: It is possible that a STA can negotiate overlapping SPs with different non-collocated APs on the same channel that are managed by a common entity (e.g., a Multi-AP group). This allows an AP to transmit frames to that STA using any of the APs which can potentially improve throughput and latency performance as the probability of multiple APs simultaneously being blocked to transmit any frame is smaller. However, for announced TWT SPs a STA is required to announce its presence in the SP by transmitting a PS-Poll or QoS Null frame (via EDCA or Triggered) or with HE TB NDP PPDU in response to a NFRP TF. If the APs do not share low level information (such as PS-Poll response), the multiple APs may not be aware of STA presence in that SP. Transmitting separate unicast PS-Polls to each as in Baseline may be inefficient.
2) Initial SP presence: A non-AP STA MLLE may be allocated multiple overlapping SPs. However, the STA may decide not to be present at both SPs initially due to (a) better power save, (b) Tx/Rx constraints. As such the AP and STA needs to uniquely identify the links in which the STA is expected to be present at the beginning of the SP so that the AP MLLE can poll it only there without wasting resources elsewhere (e.g., by transmitting BSRP frames).
3) Flexible resource allocation: During a SP or outside of it the AP or STA may need to resume or suspend TWT SPs on the fly, based on instantaneous network conditions. In 11ax TWT Information frames are used for this purpose. However, since 11ax does not define ML operation, the capability for an AP to resume or suspend a TWT SP in one link by transmitting a frame in another link is missing.

Currently there are no solutions for the first two problems. For the third one, it was proposed to extend TWT Information frame signaling to support ML operations. The exact change proposed to extend TWT Information field involved creating a new Multi-Link TWT Information field that contained a bitmap of the signaled links and the corresponding new TWT SP start allocation.

This disclosure creates a new solution consisting of both old and new subfields. It may be simpler to create a new field that only relates to multiple links (ML) operation and leverage the existing TWT Information field otherwise.

Example embodiments of the present disclosure relate to systems, methods, and devices for a mechanism to enhance STA presence signaling and resource allocation within EHT TWT SP. In one embodiment, a EHT signaling and resource allocation system may facilitate that a station device (STA) transmits a broadcast/multicast frame to multiple access points (APs) to signal its presence. In one embodiment, a EHT signaling and resource allocation system may facilitate that a STA negotiates with AP during TWT setup about the set of links it is expected to be present initially and receive TFs. In one embodiment, a EHT signaling and resource allocation system may facilitate a design for Multi-link TWT Information frames that is scalable.

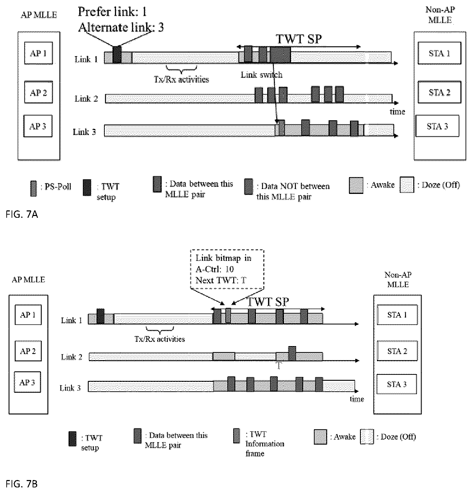

FIG. 7A and FIG. 7B depict illustrative schematic diagrams for EHT signaling and resource allocation, in accordance with one or more example embodiments of the present disclosure. In one or more embodiments, a EHT signaling and resource allocation system may facilitate STA presence signaling for non-collocated links. In one or more embodiments, a EHT signaling and resource allocation system may facilitate that if the STA wants to signal presence to multiple APs, it can transmit a broadcast or unicast or multicast frame that is expected to be parsed by all the APs. On receipt of this frame all recipient APs are aware of the STA's presence and can communicate to it during the SP. It is assumed that the STA has established security context with those APs during Multi-link or Multi-AP setup. This frame could be a Ctrl (e.g., PS-Poll) or Mgt frame or QoS-Null frame with the RA field set to a pre-agreed multicast address.

In one embodiment the STA can employ group cast with retries (GCR) with unsolicited retries to retransmit the MAC service data unit (MSDU) multiple times to increase the chances that it is received at all APs. In one embodiment the STA can employ GCR block ack scheme to ensure that the frame is correctly received at all the APs. This frame could be a Ctrl (e.g., PS-Poll) or management frame or QoS-Null frame with the RA field set to a pre-agreed unicast address. Each AP in the Multi-AP group that has a security context with the STA is expected to process frame transmitted to this address. In one or more embodiments, a EHT signaling and resource allocation system may facilitate that during setup of overlapping TWT SPs across multiple links, the STA and AP negotiates one or more preferred link(s) where it is likely to be present at the beginning of the SP. In one embodiment, the AP may only poll the STA on the preferred link (e.g., via NFRP or BSRP). In one embodiment, the STA may ignore all frames transmitted by the AP on other non-preferred links until it responds to the Poll. In one embodiment the STA may still send frames signaling its presence in another link by EDCA based channel access. The AP and STA can negotiate during TWT setup whether this behavior is permitted and on which links. For example, a single radio STA MLLE may go to intra-PPDU power save on the preferred link during the start of the SP and use EDCA based channel access to signal its presence on the other link. Normal TWT SP behavior can commence henceforth. FIG. 7A shows an example of this mechanism. FIG. 7A illustrates example usage of preferred link indicated by TWT SP where the STA is initially present to receive any DL frame from AP. Due to congestion it performs link switch and signals presence in link 3 which was also negotiated during TWT setup.

Note that the above behavior can also be achieved if the AP and STA sets up Trigger enabled TWT SPs on some links and non-Trigger enabled TWT SPs on other links as they correspond to the behavior in SPs in preferred and alternate links respectively. In this case additional rules specifying when the STA is allowed to operate on the non-trigger enabled TWT SP may be needed. In one or more embodiments, a EHT signaling and resource allocation system may facilitate ML-TWT Information frame enhancement. In one or more embodiments, a EHT signaling and resource allocation system may extend the 11ax TWT Information frame structure as follows: Add a Link ID field that signals links for which the TWT Information field contents are valid. In one embodiment this field can just consists of one or more link identifiers (e.g., Operating class and channel number, or link index). In one embodiment this field consists of a bitmap of links. In one embodiment in order to signal information corresponding to TWT SP change in one link, the STA transmits a ML TWT Information frame containing a Link ID field that identifies that link and a TWT Information field. The TWT Information field contains information corresponding to TWT SP change in the link identified in the Link ID field. Note that if there is only one TWT Information field and a bitmap is used to identify links, the bitmap shall signal "1" for exactly one bitmap position. The Multi-link TWT Information frame may have the following overall format:

**Table 1. Example Multi-link TWT Information frame Action field format:**

| **Order** | **Information** |
|---|---|
| 1 | Category |
| 2 | Unprotected S1G Action |
| 3 | Link ID |
| 4 | TWT Information |

In one embodiment in order to signal information corresponding to TWT SP change in multiple links, the STA transmits a ML TWT Information frame containing a Link ID field that identifies those links and a list of TWT Information fields. Each TWT Information field contains information corresponding to TWT SP change in one of the links, in order, identified in the Link ID bitmap. The Multi-link TWT Information frame may have the following overall format:

**Table 2. Example Multi-link TWT Information frame Action field format**

| **Order** | **Information** |
|---|---|
| 1 | Category |
| 2 | Unprotected S1G Action |
| 3 | Link ID |
| 4 | List of TWT Information fields |

In one embodiment this Link ID field is present in an A-Ctrl field in the MAC frame containing the TWT Information frame as shown in FIG. 7B. In one embodiment this Link ID field is present in another frame aggregated with the TWT Information frame. In one embodiment the TSF information contained in Next TWT field could be based on the clock used by the AP corresponding to the link in which the TWT Information frame is being sent. In one embodiment the TSF information contained in Next TWT field could be based on the clock used by the AP corresponding to the link for which that field is intended.

In some embodiments, a physical layer protocol data unit may be a physical layer conformance procedure (PLCP) protocol data unit (PPDU). In some embodiments, the AP and STAs may communicate in accordance with one of the IEEE 802.11 standards, specifically including IEEE draft specification IEEE P802.11ax/D4.0, February 2019.

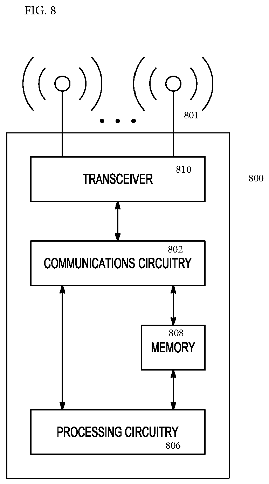

In one embodiment, FIG. 8 illustrates a functional block diagram of a communication station that may be suitable for use as an AP 102 or a user device. The communication station 800 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 800 may include communications circuitry 802 and a transceiver 810 for transmitting and receiving signals to and from other communication stations using one or more antennas 801. The communications circuitry 802 may include circuitry that can operate the physical layer (PHY) communications and/or medium access control (MAC) communications for controlling access to the wireless medium, and/or any other communications layers for transmitting and receiving signals. The communication station 800 may also include processing circuitry 806 and memory 808 arranged to perform the operations described herein. In some embodiments, the communications circuitry 802 and the processing circuitry 806 may be configured to perform operations detailed in the above figures, diagrams, and flows.

In accordance with some embodiments, the communications circuitry 802 may be arranged to contend for a wireless medium and configure frames or packets for communicating over the wireless medium. The communications circuitry 802 may be arranged to transmit and receive signals. The communications circuitry 802 may also include circuitry for modulation/demodulation, upconversion/downconversion, filtering, amplification, etc. In some embodiments, the processing circuitry 806 of the communication station 800 may include one or more processors. In other embodiments, two or more antennas 801 may be coupled to the communications circuitry 802 arranged for sending and receiving signals. The memory 808 may store information for configuring the processing circuitry 806 to perform operations for configuring and transmitting message frames and performing the various operations described herein. The memory 808 may include any type of memory, including non-transitory memory, for storing information in a form readable by a machine (e.g., a computer). For example, the memory 808 may include a computer-readable storage device, read-only memory (ROM), random-access memory (RAM), magnetic disk storage media, optical storage media, flash-memory devices and other storage devices and media.

In some embodiments, the communication station 800 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 800 may include one or more antennas 801. The antennas 801 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 800 may include one or more of a keyboard, a display, a non-volatile memory port, multiple antennas, a graphics processor, an application processor, speakers, and other mobile device elements. The display may be an LCD screen including a touch screen.

Although the communication station 800 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 800 may refer to one or more processes operating on one or more processing elements.

The Abstract is provided to allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

## Claims

1. An apparatus of an access point station, AP, the apparatus comprising: processing circuitry; and memory, wherein the AP is configured for multi-AP operation in an extremely high-throughput, EHT, network,
wherein for multi-AP coordinated beamforming, CBF, and/or multi-AP joint transmission, JT, the processing circuitry is to configure the AP to operate as a master AP (AP1) and implement a multi-AP channel sounding protocol,
wherein for the multi-AP channel sounding protocol, the processing circuitry is to configure the AP1 to:
encode a null-data packet, NDP, announcement, NDPA, frame for transmission, the NDPA frame configured to poll one or more intra-basic service set, BSS, stations, STAs (STA_{11...1N}) associated with the AP1 and one or more overlapping BSS, OBSS, STAs (STA_{21...2N}) associated with a second AP (AP2);
encode a first NDP (NDP1) frame for transmission a short inter-frame spacing, SIFS, after the NDPA frame, the NDP1 transmitted concurrently with a second NDP (NDP2) transmitted by the AP2;
encode a beam-forming refinement phase, BFRP, trigger frame for transmission an SIFS after the NDP1 frame, the BFRP trigger frame to identify both the one or more intra-BSS STAs (STA_{11...1N}) and the one or more OBSS STAs (STA_{21...2N}) ;
decode channel-state information, CSI, report frames received from the intra-BSS STAs (STA_{11...1N}) identified in the BFRP trigger frame and CSI report frames received from the one or more OBSS STAs (STA_{21...2N}) identified in the BFRP trigger frame;
encode a data trigger frame for transmission to the AP2, the intra-BSS STAs (STA_{11...1N}) and the one or more OBSS STAs (STA_{21...2N}); and
encode a data frame for transmission to the one or more intra-BSS STAs (STA_{11...1N}) based on the CSI report frames from the one or more intra-BSS STAs, the data frame being for transmission an SIFS after the data trigger frame,
wherein the data trigger frame is to trigger the AP2 to transmit a concurrent data frame to the one or more OBSS STAs (STA_{21...2N}) an SIFS after the data trigger frame.

2. The apparatus of claim 1, wherein to poll both the intra-BSS STAs (STA_{11...1N}) and the one or more OBSS STAs (STA_{21...2N}), the NDPA frame is encoded to include:
a common information field that identifies a BSS of the AP1 and identifies an OBSS of the AP2; and
a STA information field that identifies the one or more intra-BSS STAs and the one or more OBSS STAs,
wherein the common information field optionally further identifies a number of the one or more intra-BSS STAs (STA_{11...1N}) and identifies a number of the one or more OBSS STAs (STA_{21...2N})

3. The apparatus of claim 2, wherein the BFRP trigger frame, transmitted by the AP1, is encoded to include:
a common information field that identifies the BSS of the AP1, identifies an OBSS of the AP2, identifies a number of the one or more intra-BSS STAs (STA_{11...1N}) and identifies a number of the one or more OBSS STAs (STA_{21...2N}); and
a STA information field that identifies the intra-BSS STAs and the OBSS STAs,
wherein STAs identified in the STA information field are to transmit a CSI report in a TB PPDU based on channel information determined using the NDP1 and NDP2 frames, and
wherein the BFRP trigger frame is optionally further encoded to include:
an indicator to indicate whether the multi-AP channel sounding protocol is for the multi-AP CBF or for the multi-AP JT,
wherein the data frame is transmitted along with a data frame by the AP2 in accordance with either the multi-AP CBF or the multi-AP JT based on the indicator.

4. The apparatus of claim 3, wherein the NDP1 frame is for use by the one or more intra-BSS STAs (STA_{11...1N}) identified in the NDPA frame for determining channel information for the CSI reports, and
wherein the NDP2 frame is for use by the one or more OBSS STAs (STA21...2n) identified in the NDPA frame for determining channel information for the CSI report.

5. The apparatus of claim 4, wherein the NDPA frame is encoded to indicate to the AP2 to transmit the NDP2 frame an SIFS after the NDPA frame.

6. The apparatus of claim 5, wherein the AP2 is configured to transmit a further BFRP trigger frame prior to receipt of the data trigger frame from the AP1, the further BFRP trigger frame soliciting CSI reports from both the one or more intra-BSS STAs (STA_{11...1N}) and the one or more OBSS STAs (STA_{21...2N}).

7. The apparatus of any one of the preceding claims, wherein the processing circuitry comprises a baseband processor,
wherein the NDP1 frame is encoded for transmission using two or more antennas, and wherein the memory is configured to store the NDPA frame, and/or
wherein the processing circuitry is further configured to encode signalling for transmission to announce resource allocation within an EHT target wake time, TWT, service period, SP, for multi-link operation.

8. A computer-readable storage medium that stores instructions for execution by processing circuitry of an access point station, AP configured for multi-AP operation in an extremely high-throughput, EHT, network,
wherein for multi-AP coordinated beamforming, CBF, and/or multi-AP joint transmission, JT, the processing circuitry is to configure the AP to operate as a master AP (AP1) and implement a multi-AP channel sounding protocol,
wherein for the multi-AP channel sounding protocol, the processing circuitry is to configure the AP1 to:
encode a null-data packet, NDP, announcement, NDPA, frame for transmission, the NDPA frame configured to poll one or more intra-basic service set, BSS, stations, STAs associated with the AP1 and one or more overlapping BSS, OBSS, STAs associated with a second AP (AP2);
encode a first NDP (NDP1) frame for transmission a short inter-frame spacing, SIFS, after the NDPA frame, the NDP1 transmitted concurrently with a second NDP (NDP2) transmitted by the AP2;
encode a beam-forming refinement phase, BFRP, trigger frame for transmission an SIFS after the NDP1 frame, the BFRP trigger frame to identify both the one or more intra-BSS STAs and the one or more OBSS STAs;
decode channel-state information, CSI, report frames received from the intra-BSS STAs identified in the BFRP trigger frame and CSI report frames received from the one or more OBSS STAs identified in the BFRP trigger frame;
encode a data trigger frame for transmission to the AP2, the intra-BSS STAs and the one or more OBSS STAs; and
encode a data frame for transmission to the one or more intra-BSS STAs based on the CSI report frames from the one or more intra-BSS STAs, the data frame being for transmission an SIFS after the data trigger frame,
wherein the data trigger frame is to trigger the AP2 to transmit a concurrent data frame to the one or more OBSS STAs an SIFS after the data trigger frame.

9. The computer-readable storage medium of claim 8, wherein to poll both the intra-BSS STAs and the one or more OBSS STAs, the NDPA frame is encoded to include:
a common information field that identifies a BSS of the AP1 and identifies an OBSS of the AP2; and
a STA information field that identifies the one or more intra-BSS STAs and the one or more OBSS STAs.

10. The computer-readable storage medium of claim 9, wherein the common information field further identifies a number of the one or more intra-BSS STAs and identifies a number of the one or more OBSS STAs.

11. The computer-readable storage medium of claim 10, wherein the BFRP trigger frame, transmitted by the AP1, is encoded to include:
a common information field that identifies the BSS of the AP1, identifies an OBSS of the AP2, identifies a number of the one or more intra-BSS STAs and identifies a number of the one or more OBSS STAs; and
a STA information field that identifies the intra-BSS STAs and the OBSS STAs,
wherein STAs identified in the STA information field are to transmit a CSI report in a TB PPDU based on channel information determined using the NDP1 and NDP2 frames.

12. The computer-readable storage medium of claim 11, wherein the BFRP trigger frame is further encoded to include:
an indicator to indicate whether the multi-AP channel sounding protocol is for the multi- AP CBF or for the multi-AP JT,
wherein the data frame is transmitted along with a data frame by the AP2 in accordance with either the multi-AP CBF or the multi-AP JT based on the indicator.

13. The computer-readable storage medium of claim 12, wherein the NDP1 frame is for use by the one or more intra-BSS STAs identified in the NDPA frame for determining channel information for the CSI reports,
wherein the NDP2 frame is for use by the one or more OBSS STAs identified in the NDPA frame for determining channel information for the CSI report, and
wherein the NDPA frame is optionally encoded to indicate to the AP2 to transmit the NDP2 frame an SIFS after the NDPA frame.

## Patentansprüche

1. Einrichtung einer Zugangspunktstation, AP, wobei die Einrichtung Folgendes umfasst: eine Verarbeitungsschaltungsanordnung; und einen Speicher, wobei die AP für einen Multi-AP-Betrieb in einem Netz mit extrem hohem Durchsatz, EHT-Netz, konfiguriert ist, wobei die Verarbeitungsschaltungsanordnung für koordiniertes Multi-AP-Beamforming, CBF, und/oder gemeinsame Multi-AP-Übertragung, JT, die AP so konfigurieren soll, dass sie als ein Master-AP (AP1) arbeitet und ein Multi-AP-Kanalsondierungsprotokoll implementiert,
wobei die Verarbeitungsschaltungsanordnung für das Multi-AP-Kanalsondierungsprotokoll die AP1 zu Folgendem konfigurieren soll:
Codieren eines Nulldatenpaket- bzw. NDP-Ankündigungs- bzw. NDPA-Frames zur Übertragung, wobei der NDPA-Frame konfiguriert ist zum Abfragen einer oder mehrerer mit der AP1 assoziierter Intra-Basisdienstsatz- bzw. BSS-Stationen, STAs, (STA_{11...1N}) und einer oder mehrerer mit einer zweiten AP (AP2) assoziierter Überlappungs-BSS- bzw. OBSS-STAs (STA_{21...2N});
Codieren eines ersten NDP(NDP1)-Frames zur Übertragung in einem kurzen Inter-Frame-Abstand, SIFS, nach dem NDPA-Frame, wobei das NDP1 gleichzeitig mit einem zweiten NDP (NDP2) übertragen wird, das durch die AP2 übertragen wird;
Codieren eines Beamforming-Verfeinerungsphasen- bzw. BFRP-Triggerframes zur Übertragung in einem SIFS nach dem NDP1-Frame, wobei der BFRP-Triggerframe sowohl die eine oder die mehreren Intra-BSS-STAs (STA_{11...1N}) als auch die eine oder die mehreren OBSS-STAs (STA_{21...2N}) identifizieren soll;
Decodieren von Kanalzustandsinformations- bzw. CSI-Meldungsframes, die von den in dem BFRP-Triggerframe identifizierten Intra-BSS-STAs (STA_{11...1N}) empfangen werden, und CSI-Meldungsframes, die von der einen oder den mehreren in dem BFRP-Triggerframe identifizierten OBSS-STAs (STA_{21...2N}) empfangen werden;
Codieren eines Datentriggerframes zur Übertragung an den AP2, die Intra-BSS-STAs (STA_{11...1N}) und die eine oder die mehreren OBSS-STAs (STA_{21...2N}); und
Codieren eines Datenframes zur Übertragung an die eine oder die mehreren Intra-BSS-STAs (STA_{11...1N}) basierend auf den CSI-Meldungsframes von der einen oder den mehreren Intra-BSS-STAs, wobei der Datenframe zur Übertragung in einem SIFS nach dem Datentriggerframe vorgesehen ist,
wobei der Datentriggerframe die AP2 dazu triggern soll, einen gleichzeitigen Datenframe an die eine oder die mehreren OBSS-STAs (STA_{21...2N}) in einem SIFS nach dem Datentriggerframe zu übertragen.

2. Einrichtung nach Anspruch 1, wobei zum Abfragen sowohl der Intra-BSS-STAs (STA_{11...1N}) als auch der einen oder der mehreren OBSS-STAs (STA_{21...2N}) der NDPA-Frame so codiert ist, dass er Folgendes beinhaltet:
ein gemeinsames Informationsfeld, das einen BSS der AP1 identifiziert und einen OBSS der AP2 identifiziert; und ein STA-Informationsfeld, das die eine oder die mehreren Intra-BSS-STAs und die eine oder die mehreren OBSS-STAs identifiziert,
wobei das gemeinsame Informationsfeld optional ferner eine Anzahl der einen oder der mehreren Intra-BSS-STAs (STA_{11...1N}) identifiziert und eine Anzahl der einen oder der mehreren OBSS-STAs (STA_{21...2N}) identifiziert.

3. Einrichtung nach Anspruch 2, wobei der BFRP-Triggerframe, der durch die AP1 übertragen wird, so codiert ist, dass er Folgendes beinhaltet:
ein gemeinsames Informationsfeld, das den BSS der AP1 identifiziert, einen OBSS der AP2 identifiziert, eine Anzahl der einen oder der mehreren Intra-BSS-STAs (STA_{11...1N}) identifiziert und eine Anzahl der einen oder der mehreren OBSS-STAs (STA_{21...2N}) identifiziert; und
ein STA-Informationsfeld, das die Intra-BSS-STAs und die OBSS-STAs identifiziert,
wobei in dem STA-Informationsfeld identifizierte STAs eine CSI-Meldung in einer TB-PPDU basierend auf unter Verwendung der NDP1- und NDP2-Frames bestimmten Kanalinformationen übertragen sollen, und
wobei der BFRP-Triggerframe optional ferner so codiert ist, dass er Folgendes beinhaltet:
einen Indikator zum Angeben, ob das Multi-AP-Kanalsondierungsprotokoll für das Multi-AP-CBF oder für die Multi-AP-JT vorgesehen ist,
wobei der Datenframe zusammen mit einem Datenframe durch die AP2 gemäß entweder dem Multi-AP-CBF oder der Multi-AP-JT basierend auf dem Indikator übertragen wird.

4. Einrichtung nach Anspruch 3, wobei der NDP1-Frame zur Verwendung durch die eine oder die mehreren in dem NDPA-Frame identifizierten Intra-BSS-STAs (STA_{11...1N}) zum Bestimmen von Kanalinformationen für die CSI-Meldungen vorgesehen ist, und
wobei der NDP2-Frame zur Verwendung durch die eine oder die mehreren in dem NDPA-Frame identifizierten OBSS-STAs (STA_{21...2N}) zum Bestimmen von Kanalinformationen für die CSI-Meldung vorgesehen ist.

5. Einrichtung nach Anspruch 4, wobei der NDPA-Frame so codiert ist, dass er der AP2 angibt, den NDP2-Frame in einem SIFS nach dem NDPA-Frame zu übertragen.

6. Einrichtung nach Anspruch 5, wobei die AP2 dazu konfiguriert ist, einen weiteren BFRP-Triggerframe vor dem Empfang des Datentriggerframes von der AP1 zu übertragen, wobei der weitere BFRP-Triggerframe CSI-Meldungen sowohl von der einen oder den mehreren Intra-BSS-STAs (STA_{11...1N}) als auch von der einen oder den mehreren OBSS-STAs (STA_{21...2N}) anfordert.

7. Einrichtung nach einem der vorhergehenden Ansprüche, wobei die Verarbeitungsschaltungsanordnung einen Basisbandprozessor umfasst,
wobei der NDP1-Frame zur Übertragung unter Verwendung von zwei oder mehr Antennen codiert ist und wobei der Speicher dazu konfiguriert ist, den NDPA-Frame zu speichern, und/oder
wobei die Verarbeitungsschaltungsanordnung ferner dazu konfiguriert ist, eine Signalisierung zur Übertragung zu codieren, um eine Ressourcenzuweisung innerhalb einer EHT-Ziel-Weckzeit- bzw. -TWT-Dienstperiode- bzw. -SP für einen Multi-Link-Betrieb anzukündigen.

8. Computerlesbares Speichermedium, das Anweisungen zur Ausführung durch eine Verarbeitungsschaltungsanordnung einer Zugangspunktstation, AP, die für einen Multi-AP-Betrieb in einem Netz mit extrem hohem Durchsatz, EHT-Netz, konfiguriert ist, speichert,
wobei die Verarbeitungsschaltungsanordnung für koordiniertes Multi-AP-Beamforming, CBF, und/oder gemeinsame Multi-AP-Übertragung, JT, die AP so konfigurieren soll, dass sie als ein Master-AP (AP1) arbeitet und ein Multi-AP-Kanalsondierungsprotokoll implementiert,
wobei die Verarbeitungsschaltungsanordnung für das Multi-AP-Kanalsondierungsprotokoll die AP1 zu Folgendem konfigurieren soll:
Codieren eines Nulldatenpaket- bzw. NDP-Ankündigungs- bzw. NDPA-Frames zur Übertragung, wobei der NDPA-Frame konfiguriert ist zum Abfragen einer oder mehrerer mit der AP1 assoziierter Intra-Basisdienstsatz- bzw. BSS-Stationen, STAs, und einer oder mehrerer mit einer zweiten AP (AP2) assoziierter Überlappungs-BSS- bzw. OBSS-STAs;
Codieren eines ersten NDP(NDP1)-Frames zur Übertragung in einem kurzen Inter-Frame-Abstand, SIFS, nach dem NDPA-Frame, wobei das NDP1 gleichzeitig mit einem zweiten NDP (NDP2) übertragen wird, das durch die AP2 übertragen wird;
Codieren eines Beamforming-Verfeinerungsphasen- bzw. BFRP-Triggerframes zur Übertragung in einem SIFS nach dem NDP1-Frame, wobei der BFRP-Triggerframe sowohl die eine oder die mehreren Intra-BSS-STAs als auch die eine oder die mehreren OBSS-STAs identifizieren soll;
Decodieren von Kanalzustandsinformations- bzw. CSI-Meldungsframes, die von den in dem BFRP-Triggerframe identifizierten Intra-BSS-STAs empfangen werden, und CSI-Meldungsframes, die von der einen oder den mehreren in dem BFRP-Triggerframe identifizierten OBSS-STAs empfangen werden;
Codieren eines Datentriggerframes zur Übertragung an den AP2, die Intra-BSS-STAs und die eine oder die mehreren OBSS-STAs; und
Codieren eines Datenframes zur Übertragung an die eine oder die mehreren Intra-BSS-STAs basierend auf den CSI-Meldungsframes von der einen oder den mehreren Intra-BSS-STAs, wobei der Datenframe zur Übertragung in einem SIFS nach dem Datentriggerframe vorgesehen ist,
wobei der Datentriggerframe die AP2 dazu triggern soll, einen gleichzeitigen Datenframe an die eine oder die mehreren OBSS-STAs in einem SIFS nach dem Datentriggerframe zu übertragen.

9. Computerlesbares Speichermedium nach Anspruch 8, wobei zum Abfragen sowohl der Intra-BSS-STAs als auch der einen oder der mehreren OBSS-STAs der NDPA-Frame so codiert ist, dass er Folgendes beinhaltet:
ein gemeinsames Informationsfeld, das einen BSS der AP1 identifiziert und einen OBSS der AP2 identifiziert; und ein STA-Informationsfeld, das die eine oder die mehreren Intra-BSS-STAs und die eine oder die mehreren OBSS-STAs identifiziert.

10. Computerlesbares Speichermedium nach Anspruch 9, wobei das gemeinsame Informationsfeld ferner eine Anzahl der einen oder der mehreren Intra-BSS-STAs identifiziert und eine Anzahl der einen oder der mehreren OBSS-STAs identifiziert.

11. Computerlesbares Speichermedium nach Anspruch 10, wobei der BFRP-Triggerframe, der durch die AP1 übertragen wird, so codiert ist, dass er Folgendes beinhaltet:
ein gemeinsames Informationsfeld, das den BSS der AP1 identifiziert, einen OBSS der AP2 identifiziert, eine Anzahl der einen oder der mehreren Intra-BSS-STAs identifiziert und eine Anzahl der einen oder der mehreren OBSS-STAs identifiziert; und
ein STA-Informationsfeld, das die Intra-BSS-STAs und die OBSS-STAs identifiziert,
wobei in dem STA-Informationsfeld identifizierte STAs eine CSI-Meldung in einer TB-PPDU basierend auf unter Verwendung der NDP1- und NDP2-Frames bestimmten Kanalinformationen übertragen sollen.

12. Computerlesbares Speichermedium nach Anspruch 11, wobei der BFRP-Triggerframe ferner so codiert ist, dass er Folgendes beinhaltet:
einen Indikator zum Angeben, ob das Multi-AP-Kanalsondierungsprotokoll für das Multi-AP-CBF oder für die Multi-AP-JT vorgesehen ist,
wobei der Datenframe zusammen mit einem Datenframe durch die AP2 gemäß entweder dem Multi-AP-CBF oder der Multi-AP-JT basierend auf dem Indikator übertragen wird.

13. Computerlesbares Speichermedium nach Anspruch 12, wobei der NDP1-Frame zur Verwendung durch die eine oder die mehreren in dem NDPA-Frame identifizierten Intra-BSS-STAs zum Bestimmen von Kanalinformationen für die CSI-Meldungen vorgesehen ist,
wobei der NDP2-Frame zur Verwendung durch die eine oder die mehreren in dem NDPA-Frame identifizierten OBSS-STAs zum Bestimmen von Kanalinformationen für die CSI-Meldung vorgesehen ist, und
wobei der NDPA-Frame optional so codiert ist, dass er der AP2 angibt, den NDP2-Frame in einem SIFS nach dem NDPA-Frame zu übertragen.

## Revendications

1. Appareil d'une station de point d'accès, « Access Point » AP, l'appareil comprenant : une circuiterie de traitement ; et une mémoire, dans lequel l'AP est configurée pour fonctionnement multi-AP dans un réseau à débit extrêmement élevé, « Extremely High-Throughput » EHT,
dans lequel pour formation de faisceau coordonnée, « Coordinated BeamForming » CBF, multi-AP, et/ou transmission conjointe, « Joint Transmission » JT, multi-AP, la circuiterie de traitement doit configurer l'AP pour fonctionner en tant qu'AP maître (AP1) et mettre en œuvre un protocole de sondage de canal multi-AP,
dans lequel, pour le protocole de sondage de canal multi-AP, la circuiterie de traitement doit configurer l'AP1 pour :
encoder une trame d'annonce de paquet à données nulles, « Null-Data Packet, NDP, Announcement, NDPA », pour transmission, la trame NDPA étant configurée pour appeler une ou plusieurs stations, STAs, intra-ensemble de services de base, « Basic Service Set » BSS, (STA_{11...1N}) associées à l'AP1 et une ou plusieurs STAs BSS en chevauchement, « Overlapping BSS » OBSS, (STA_{21...2N}) associées à un second AP (AP2) ;
encoder une première trame NPD (NDP1) pour transmission en un espacement inter-trame court, « Short Inter-Frame Spacing » SIFS, après la trame NDPA, la NDP1 étant transmise simultanément à une seconde NPD (NDP2) transmise par l'AP2 ;
encoder une trame de déclenchement de phase d'affinement de formation de faisceau, « Beam-Forming Refinement Phase » BFRP pour transmission en un SIFS après la trame NDP1, la trame de déclenchement BFRP devant identifier à la fois l'une ou les plusieurs STAs intra-BSS (STA_{11...1N}) et l'une ou les plusieurs STAs OBSS (STA_{21...2N}) ;
décoder des trames de rapport d'informations d'état de canal, « Channel-State Information » CSI reçues en provenance des STAs intra-BSS (STA_{11...1N}) identifiées dans la trame de déclenchement BFRP et des trames de rapport CSI reçues en provenance l'une ou des plusieurs STAs OBSS (STA_{21...2N}) identifiées dans la trame de déclenchement BFRP ;
encoder une trame de déclenchement de données pour transmission à l'AP2, aux STAs intra-BSS (STA_{11...1N}), et à l'une ou aux plusieurs STAs OBSS (STA_{21...2N}) ; et
encoder une trame de données pour transmission à l'une ou aux plusieurs STAs intra-BSS (STA_{11...1N}) sur la base des trames de rapport CSI provenant de l'une ou des plusieurs STAs intra-BSS, la trame de données étant pour transmission en un SIFS après la trame de déclenchement de données,
dans lequel la trame de déclenchement de données doit déclencher l'AP2 pour transmettre une trame de données simultanée à l'une ou aux plusieurs STAs OBSS (STA_{21...2N}) en un SIFS après la trame de déclenchement de données.

2. Appareil de la revendication 1, dans lequel pour appeler à la fois les STAs intra-BSS (STA_{11...1N}) et l'une ou les plusieurs STAs OBSS (STA_{21...2N}), la trame NDPA est codée pour inclure :
un champ d'informations commun qui identifie un BSS de l'AP1 et identifie un OBSS de l'AP2 ; et
un champ d'informations STA qui identifie l'une ou les plusieurs STAs intra-BSS et l'une ou les plusieurs STAs OBSS,
dans lequel le champ d'informations commun identifie facultativement en outre un nombre de l'une ou des plusieurs STAs intra-BSS (STA_{11...1N}) et identifie un nombre de l'une ou des plusieurs STAs OBSS (STA_{21...2N}).

3. Appareil de la revendication 2, dans lequel la trame de déclenchement BFRP, transmise par l'AP1, est encodée pour inclure :
un champ d'informations commun qui identifie le BSS de l'AP1, identifie un OBSS de l'AP2, identifie un nombre de l'une ou des plusieurs STAs intra-BSS (STA_{11...1N}) et identifie un nombre de l'une ou des plusieurs STAs OBSS (STA_{21...2N}) ; et
un champ d'informations STA qui identifie les STAs intra-BSS et les STAs OBSS,
dans lequel des STAs identifiées dans le champ d'informations STA doivent transmettre un rapport CSI dans une TB PPDU sur la base d'informations de canal déterminées en utilisant les trames NDP1 et NDP2, et
dans lequel la trame de déclenchement BFRP est facultativement en outre encodée pour inclure :
un indicateur pour indiquer le fait que le protocole de sondage de canal multi-AP est pour la CBF multi-AP ou pour la JT multi-AP,
dans lequel la trame de données est transmise conjointement avec une trame de données par l'AP2 conformément à la CBF multi-AP ou à la JT multi-AP sur la base de l'indicateur.

4. Appareil de la revendication 3, dans lequel la trame NDP1 est destinée à être utilisée par l'une ou les plusieurs STAs intra-BSS (STA_{11...1N}) identifiées dans la trame NDPA pour déterminer des informations de canal pour les rapports CSI, et
dans lequel la trame NDP2 est destinée à être utilisée par l'une ou les plusieurs STAs OBSS (STA_{21...2N}) identifiées dans la trame NDPA pour déterminer des informations de canal pour le rapport CSI.

5. Appareil de la revendication 4, dans lequel la trame NDPA est encodée pour indiquer à l'AP2 de transmettre la trame NDP2 en un SIFS après la trame NDPA.

6. Appareil de la revendication 5, dans lequel l'AP2 est configurée pour transmettre une trame de déclenchement BFRP supplémentaire avant la réception de la trame de déclenchement de données en provenance de l'AP1, la trame de déclenchement BFRP supplémentaire sollicitant des rapports CSI auprès à la fois de l'une ou des plusieurs STAs intra-BSS (STA_{11...1N}) et de l'une ou des plusieurs STAs OBSS (STA_{21...2N}).

7. Appareil d'une quelconque des revendications précédentes, dans lequel la circuiterie de traitement comprend un processeur de bande de base,
dans lequel la trame NDP1 est encodée pour transmission en utilisant deux, ou plus, antennes, et dans lequel la mémoire est configurée pour stocker la trame NDPA, et/ou dans lequel la circuiterie de traitement est en outre configurée pour encoder une signalisation pour transmission pour annoncer une attribution de ressources dans les limites d'une période de service, « Service Period » SP, de temps d'éveil cible, « Target Wake Time » TWT, EHT, pour fonctionnement multi-liaison.

8. Support de stockage lisible par ordinateur qui stocke des instructions pour l'exécution par une circuiterie de traitement d'une station de point d'accès, « Access Point » AP configurée pour fonctionnement multi-AP dans un réseau à débit extrêmement élevé, « Extremely High-Throughput » EHT,
dans lequel pour formation de faisceau coordonnée, « Coordinated BeamForming » CBF, multi-AP, et/ou transmission conjointe, « Joint Transmission » JT, multi-AP, la circuiterie de traitement doit configurer l'AP pour fonctionner en tant qu'AP maître (AP1) et mettre en œuvre un protocole de sondage de canal multi-AP,
dans lequel, pour le protocole de sondage de canal multi-AP, la circuiterie de traitement doit configurer l'AP1 pour :
encoder une trame d'annonce de paquet à données nulles, « Null-Data Packet, NDP, Announcement, NDPA », pour transmission, la trame NDPA étant configurée pour appeler une ou plusieurs stations, STAs, intra-ensemble de services de base, « Basic Service Set » BSS associées à l'AP1 et une ou plusieurs STAs BSS en chevauchement, « Overlapping BSS » OBSS, associées à une second AP (AP2) ;
encoder une première trame NPD (NDP1) pour transmission en un espacement inter-trame court, « Short Inter-Frame Spacing » SIFS, après la trame NDPA, la NDP1 étant transmise simultanément à une seconde NPD (NDP2) transmise par l'AP2 ;
encoder une trame de déclenchement de phase d'affinement de formation de faisceau, « Beam-Forming Refinement Phase » BFRP pour transmission en un SIFS après la trame NDP1, la trame de déclenchement BFRP devant identifier à la fois l'une ou les plusieurs STAs intra-BSS et l'une ou les plusieurs STAs OBSS ;
décoder des trames de rapport d'informations d'état de canal, « Channel-State Information » CSI reçues en provenance des STAs intra-BSS identifiées dans la trame de déclenchement BFRP et des trames de rapport CSI reçues en provenance l'une ou des plusieurs STAs OBSS identifiées dans la trame de déclenchement BFRP ;
encoder une trame de déclenchement de données pour transmission à l'AP2, aux STAs intra-BSS, et à l'une ou aux plusieurs STAs OBSS ; et
encoder une trame de données pour transmission à l'une ou aux plusieurs STAs intra-BSS sur la base des trames de rapport CSI provenant de l'une ou des plusieurs STAs intra-BSS, la trame de données étant pour transmission en un SIFS après la trame de déclenchement de données,
dans lequel la trame de déclenchement de données doit déclencher l'AP2 pour transmettre une trame de données simultanée à l'une ou aux plusieurs STAs OBSS en un SIFS après la trame de déclenchement de données.

9. Support de stockage lisible par ordinateur de la revendication 8, dans lequel, pour appeler à la fois les STAs intra-BSS et l'une ou les plusieurs STAs OBSS, la trame NDPA est encodée pour inclure :
un champ d'informations commun qui identifie un BSS de l'AP1 et identifie un OBSS de l'AP2 ; et
un champ d'informations STA qui identifie l'une ou les plusieurs STAs intra-BSS et l'une ou les plusieurs STAs OBSS.

10. Support de stockage lisible par ordinateur de la revendication 9, dans lequel le champ d'informations commun identifie en outre un nombre de l'une ou des plusieurs STAs intra-BSS et identifie un nombre de l'une ou des plusieurs STAs OBSS.

11. Support de stockage lisible par ordinateur de la revendication 10, dans lequel la trame de déclenchement BFRP, transmise par l'AP1, est encodée pour inclure :
un champ d'informations commun qui identifie le BSS de l'AP1, identifie un OBSS de l'AP2, identifie un nombre de l'une ou des plusieurs STAs intra-BSS, et identifie un nombre de l'une ou des plusieurs STAs OBSS ; et
un champ d'informations STA qui identifie les STAs intra-BSS et les STAs OBSS,
dans lequel les STAs identifiées dans le champ d'informations STA doivent transmettre un rapport CSI dans une TB PPDU sur la base d'informations de canal déterminées en utilisant les trames NDP1 et NDP2.

12. Support de stockage lisible par ordinateur de la revendication 11, dans lequel la trame de déclenchement BFRP est en outre encodée pour inclure :
un indicateur pour indiquer le fait que le protocole de sondage de canal multi-AP est pour la CBF multi-AP ou pour la JT multi-AP,
dans lequel la trame de données est transmise conjointement avec une trame de données par l'AP2 conformément à la CBF multi-AP ou à la JT multi-AP sur la base de l'indicateur.

13. Support de stockage lisible par ordinateur de la revendication 12, dans lequel la trame NDP1 est destinée à être utilisée par l'une ou les plusieurs STAs intra-BSS identifiées dans la trame NDPA pour déterminer des informations de canal pour les rapports CSI,
dans lequel la trame NDP2 est destinée à être utilisée par l'une ou les plusieurs STAs OBSS identifiées dans la trame NDPA pour déterminer des informations de canal pour le rapport CSI, et
dans lequel la trame NDPA est facultativement encodée pour indiquer à l'AP2 de transmettre la trame NDP2 en un SIFS après la trame NDPA.
